(19) Europäisches Patentamt
European Patent Office
Office européen des brevets

(11) Publication number: **0 148 579**
**B1**

# (12) EUROPEAN PATENT SPECIFICATION

(45) Date of publication of patent specification: **02.08.89**

(51) Int. Cl.$^4$: **C 09 D 3/58,** C 08 G 59/14, C 08 G 59/62

(21) Application number: **84307948.4**

(22) Date of filing: **16.11.84**

## (54) Thermosetting coating composition.

(30) Priority: **27.12.83 US 565320**
**27.12.83 US 565321**
**27.12.83 US 565800**

(43) Date of publication of application:
**17.07.85 Bulletin 85/29**

(45) Publication of the grant of the patent:
**02.08.89 Bulletin 89/31**

(84) Designated Contracting States:
**DE FR GB**

(56) References cited:
**US-A-4 119 595**
**US-A-4 322 508**

(73) Proprietor: **E.I. DU PONT DE NEMOURS AND COMPANY**
**1007 Market Street**
**Wilmington Delaware 19898 (US)**

(72) Inventor: **Kordomenos, Panagiotis I**
**42758 Elizabeth Circle**
**Mount Clemens Michigan 48044 (US)**

(74) Representative: **Woodcraft, David Charles et al**
**BROOKES & MARTIN High Holborn House**
**52/54 High Holborn**
**London, WC1V 6SE (GB)**

**EP 0 148 579 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Technical Field

This invention relates to a novel, solvent-based, thermosetting epoxy ester coating composition. It relates also to such coating composition formulated, for example, as sprayable coating composition suitable for use as an automotive vehicle primer to make coatings which are highly resistant to corrosion, humidity and solvents.

Background

Solvent-based coating compositions are known which can be applied to a substrate, for example, by spraying, and then cured by baking the coated substrate at an elevated temperature suitable to drive off the organic solvent and to promote crosslinking reaction. The resulting thermoset coating, if sufficiently humidity and solvent resistant, can provide aesthetic and functional advantages including corrosion protection for the underlying substrate.

It is an object of the present invention to provide solvent-based thermosetting coating compositions comprising hydroxy functional epoxy ester resins which are crosslinkable during cure, on the surface of a substrate.

The coating has advantageous physical properties including, for example, humidity and solvent resistance and corrosion protection for the underlying substrate.

Disclosure of the Invention

According to the present invention, a novel organic solvent based coating composition, in addition to solvent and any pigments and additives such as, for example, catalyst, flow control agents and the like, comprises:

A) crosslinkable hydroxy functional epoxy ester resin preferably having a number average molecular weight (Mn) between about 1,000 and about 5,000 and comprising the reaction product of diepoxide reactant (a) in chain extension reaction with (i) diphenol reactant, or (ii) both diphenol and dicarboxylic acid reactant, and (b) either subsequently or simultaneously in chain termination reaction with acid component comprising primary hydroxy functional acid; and

B) polyfunctional, hydroxy-reactive crosslinking agent selected preferably from aminoplast crosslinking agent such as, for example, hexamethoxymethyl melamine, and blocked polyisocyanate crosslinking agent including, but not limited to, blocked trifunctional isocyanurate ring containing polyisocyanates and oligoester modified blocked isocyanates, or a compatible mixture of any of them.

Particularly preferred compositions of the invention are those adapted to be applied by spraying onto a substrate. Such compositions are especially useful as a primer coat on the bare, unpolished metal surface of an automotive vehicle body panel.

A method of making a corrosion, solvent and humidity resistant coating on a substrate comprises applying to the substrate the solvent based thermosetting coating composition of the invention and subsequently subjecting the coating to an elevated temperature for a time period sufficient to substantially cure the coating layer. Typically, the novel coating compositions of the invention can be cured by heating to between about 115°C (240°F) and about 204°C (400°F) period sufficient to yield a cured coating, for example for about 10 to about 60 minutes. According to preferred embodiments of the invention, the coating composition can be sufficiently cured for good coating properties by heating to about 115°C (240°F) for about 20 minutes but, in addition, such preferred composition will tolerate curing at up to about 204° (400°F) for as much as about 60 minutes without substantial loss of such advantageous coating properties.

The coating compositions of the present invention provide cure-response advantages without sacrifice of advantageous physical properties in the cured coating. That is, when applied, for example, over a metallic substrate, such as when applied as an automotive vehicle primer coat over sheet steel, cured coatings according to the invention have been found to provide excellent adhesion to the substrate, excellent humidity resistance, and excellent corrosion resistance.

Preferred compositions of the invention include significant aromatic content which is believed to enhance corrosion resistance properties. It is now believed that aromatics in a coating composition, such as a primer composition for a metal substrate, are more resistant to hydrolysis than are aliphatics. Accordingly, while not wishing to be bound by theory, it is presently believed that the high aromatic content of the epoxy ester resin employed in the preferred compositions of the invention explains in part the exceptional corrosion protection found to be provided by same used as primers on ferrous metal substrates. This is especially the case, for example, according to preferred embodiments wherein diphenol chain extension reactant is used, and, in addition, the diepoxide reactant also provides aromatic units to the resin. In addition, it is presently understood that the phenolic oxygens introduced into the epoxy ester resin by chain extension reaction of diphenol with diepoxy advantageously provide excellent adhesion to metal substrate, for example steel substrate. The high aromatic content of the cured coating and its excellent adhesion are seen each to enhance the advantage provided by the other, to yield the above-mentioned exceptional corrosion protection of the cured coatings of the invention.

Other features and advantages of this invention will become more apparent from the following,

detailed description thereof including the preferred embodiments and the best mode of carrying out this invention.

Detailed Description of the Invention

The hydroxy functional epoxy ester resin employed in the composition of the present invention preferably has a number average molecular weight (Mn) of between about 1,000 and about 5,000. More preferably, especially for use in sprayable coating compositions of higher solids content, the eoxy ester resin has a number average molecular weight (Mn) of between about 1000 and about 3000. The hydroxy functional epoxy ester resin is formed by reacting diepoxide with diphenol, or both diphenol and dicarboxylic acid to yield a diepoxide functional chain-extension reaction product and, either simultaneously or subsequently, reacting such diepoxide reaction product preferably in approximately 1 to 1 equivalent ratio with acid component comprising primary hydroxy functional acid in chain terminating reaction.

Thermosetting compositions of the invention comprise such epoxy ester resin and polyfunctional hydroxy-reactive crosslinking agent selected, preferably, from aminoplast crosslinking agent, blocked polyisocyanate crosslinking agent comprising at least two isocyanate groups blocked by reaction with an active hydrogen bearing blocking agent. The polyfunctional crosslinking agent is included in the composition in an amount sufficient to provide between about 0.5 and about 1.6 reactive groups per hydroxy functionality of the epoxy ester resin.

Each of the above major components of the compositions as well as optional components and other aspects of the invention are described hereinafter in greater detail.

## A. Epoxy Ester Resin

### (i) Diepoxide Reactant

The diepoxide reactant suitable for preparing the hydroxy functional epoxy ester resin can be any of numerous diepoxides including many which are commercially available and which will be apparent to the skilled of the art in view of the present disclosure. While, ultimately, the choice of diepoxide reactant for preparing the hydroxy functional epoxy ester resin will depend to an extent upon the particular application intended for the final coating composition, terminal diepoxides, that is diepoxides bearing two terminal epoxide groups, are generally most preferred. These are generally more reactive and therefore require milder reaction conditions under which undesirable side reactions, for example, epoxy-epoxy reactions and gelation, can be more easily avoided. When the diepoxide reactant is chain extended with diphenol reactant and dicarboxylic acid reactant, such reactions preferably are carried out substantially simultaneously.

Preferably, the diepoxide has a number average molecular weight (Mn) between about 100 and about 1000, and more preferably between about 100 and about 600.

Suitable diepoxide reactants include, for example, bisphenol-A epichlorohydrin epoxy resins such as 'the Epon (trademark) series, Shell Chemical Company, Houston, Texas, and the DER (trademark) series, Dow Chemical Company, Midland, Michigan. These diglycidyl ether bisphenol-A resins and higher molecular weight analogs thereof, are preferred in view of their low cost and commercial availability.

Also suitable are cycloaliphatic diepoxy resins, such as, for example, the Eponex (trademark) series, Shell Chemical company, Houston, Texas; hydantoin epoxy resins such as, for example, Resin XB2793 (trademark), Ciba-Geigy Corporation, Ardsley, New York; and any of a wide variety of acyclic or cyclic aliphatic diepoxides such as, for example, 1,4-butanediol diglycidyl ether and 4-vinylcyclohexene dioxide and the like. Other suitable diepoxides, are commercially available or are readily prepared by those skilled in the art and will be apparent to the skilled of the art in view of the present disclosure. Also, it will be understood from the foregoing that any mixture of compatible diepoxides may be used.

In addition to the diepoxide, a portion of the epoxy functionality can be provided by any compatible monoepoxy compound or polyepoxy compound or mixture of such compounds. Suitable polyepoxides include, for example, those of molecular weight about 200 to about 800. The polyepoxide can be any of the well known types such as polyglycidyl ethers of polyphenols. These can be produced by etherification of polyphenol with epihalohydrin in the presence of alkali. It will be recognized by the skilled of the art in view of the present disclosure, that in some instances, particularly where a coating composition of high solids content is less important, it may be desirable to incorporate polyepoxide of higher molecular weight. Preferably, any such polyepoxide contains free hydroxyl groups in addition to epoxide groups.

While polyglycidyl ethers of polyphenol can be employed, it may be desirable to react a portion of the reactive sites (hydroxyl or in some instances epoxy) with a modifying material to vary the film characteristics of the resin. The epoxy resin may be modified, for example, with isocyanate group containing organic materials or other reactive organic materials.

Other useful polyepoxides are the novolak resins including, for example, the novolak epoxy resins ECN 1235 (trademark) and ECN 1273 (trademark), Ciba-Geigy Corporation.

According to preferred embodiments of the present invention, epoxide compounds other than diepoxide compounds provide no more than about 15% and most preferably substantially none of the total epoxide functionality in the reactants used to form the epoxy-ester resin.

(ii) Diphenol Reactant

The diphenol reactants suitable for reaction with the diepoxide reactant in chain extension reaction include numerous commercially available materials, many of which will be readily apparent to the skilled of the art in view of the present disclosure. Preferred diphenols have the general formula (I):

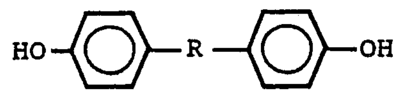

(I)

wherein R is a divalent linking moiety substantially unreactive with the diepoxide resin. Preferably R is a divalent organic linking moiety, for example, C=O, $(CH_2)_n$ wherein n is preferably from 1 to about 8, and the like, although inorganic moieties, for example sulfonyl and the like, also are suitable. Diphenols of this character have been found to provide good reactivity with diepoxides described above and to provide, ultimately, cured coatings of the invention having excellent physical properties, most notably excellent corrosion protection. It will be apparent to the skilled of the art in view of the present disclosure that R should be substantially unreactive with the diepoxide and the acid component employed in preparation of the epoxy ester resin. Particularly preferred diphenols include those according to formula (I) above, wherein R is selected from the group consisting of a straight or branched alkylene or alkylidene moiety of one to about 10 carbons, preferably having three to four carbons and most preferably having the general formula (II):

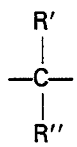

(II)

wherein R′ and R″ are the same or different and each is a monovalent organic moiety preferably selected from the group consisting of hydrogen and lower alkyl of one to about four carbons, most preferably one to two carbons, and the like or a mixture of any of them. Preferably the diphenol has a number average molecular weight (Mn) between about 180 and about 500, more preferably between about 180 and about 250. Such diphenols include, for example bisphenol-A, which is most preferred, bisphenol-B and the like and a compatible mixture of any of them. As used herein the term diphenol may include, for example, compounds comprising a single dihydroxy substituted phenyl ring such as benzenediol. More preferred, however, are those diphenols providing two terminal, monohydroxy substituted phenyl rings such as in formula (I), above. Other examples of diphenols are bis-(4-hydroxytertutylphenyl)-2,2-propane, bis-(2-hydroxynapthylmethane and 1,5-dihydroxynaphthalene. Other suitable diphenols for the epoxy ester resin of the present invention will be apparent to the skilled of the art in view of the present disclosure.

(iii) Dicarboxylic Acid Reactant

The dicarboxylic acid reactant preferably has a number average molecular weight between about 145 and about 1000 and more preferably between about 500 and about 600. Suitable dicarboxylic acids include numerous commercially available materials, many of which will be readily apparent to the skilled of the art in view of the present disclosure. Suitable dicarboxylic acids include saturated and unsaturated, cyclic and acyclic, aliphatic and aromatic dicarboxylic acids and any compatible mixture thereof. Acyclic aliphatic dicarboxylic acids are generally preferred in view of the enhanced flexibility they provide to the cured coatings of the invention. Preferred dicarboxylic acids have the general formula (III):

$$HOOC—R'''—COOH \quad (III)$$

wherein R‴ is a divalent linking moiety substantially unreactive with the diepoxide resin. It will be apparent to the skilled of the art in view of the present disclosure, that R‴ should be substantially unreactive also with the acid component employed in preparation of the epoxy ester resin, the diphenol reactant and the hydroxy functionality generated in the chain-extension reaction. Preferably R‴ is a divalent, organic, linking moiety. Particularly preferred are those dicarboxylic acids wherein R‴ is selected from the group comprising a straight or branched alkylene or alkylidene moiety, preferably about 4—42 carbons, for example, $(CH_2)_n$ wherein n is preferably from about 4 to about 42, and the like or a mixture thereof. Dicarboxylic acids of this character have been found to provide good reactivity with the preferred diepoxides described above and to provide, ultimately, cured coatings of the invention having excellent physical properties, most notably excellent flexibility and corrosion protection.

Exemplary dicarboxylic acids include adipic acid, 3,3-dimethylpentanedioic acid, benzenedicarboxylic acid, phenylenediethanoic acid, napthalenedicarboxylic acid, pimelic acid, suberic acid, azelaic acid, sebacic acid, and the like or a compatible mixture of any of them. The anhydrides of these acids, where the anhydrides exists, are, of course, embraced in the term "acid". While dicarboxylic acids according to formula (I) can be used, wherein R‴ is an alkylene chain of less than 4 carbons, for example, oxalic acid, malonic acid, succinic acid, glutaric acid and the like, these are less preferred in view of the somewhat

lesser degree of flexibility provided thereby. Preferably the dicarboxylic acid provides two terminal carboxyl groups. Similarly, preferred aromatic dicarboxylic acids are those wherein the carboxylic groups are more spaced apart, for example, 1,4-benzenedicarboxylic acid and 2,7-naphthalenedicarboxylic acid.

The most preferred dicarboxylic acids are substantially saturated, acyclic, aliphatic dimer acids, which are well known to the skilled of the art and readily commercially available. These are typically the dimerization reaction products of fatty acids which have from 4 to 22 carbons and a terminal carboxyl group. Of these, dimer acid of 36 carbons is most preferred since it provides excellent reactivity with the preferred diepoxides described above and provides, ultimately, cured coatings of the invention having excellent physical properties. In addition, dimer acid of 36 carbons is readily commercially available, for example, as Empol 1014 (trademark), Empol 1016 (trademark) and Empol 1018 (trademark), each available from Emery Industries, Inc., Cincinnati, Ohio. It should be recognized that most or all commercially available dimer acids contain some portion of trimer acid, typically, for example, about 5—10% but in some cases as much as 30% or more, and also contain a usually smaller portion of monocarboxylic acid. As used herein, the term "dimer acid" includes those containing such materials. Most preferred in the present compositions are products that contain mostly dibasic acid and none or low amounts of tribasic and monobasic acids.

Aliphatic dicarboxylic acids are seen to provide additional advantages. In particular, while not wishing to be bound by theory, it is presently understood that epoxy ester resins derived therefrom wet the substrate surface better and provide enhanced adhesion between the substrate and the cured coating. They also flow better and, thus, provide an excellent smooth surface upon being cured. Also, the aliphatic units provide enhanced flexibility to the cured coating, as noted above.

Where corrosion protection for the substrate is important, it may be preferred to employ dicarboxylic acid according to formula (I) above, wherein R''' is, at least in part, aromatic. As noted above, it is believed that such aromatics in the coating composition of the invention, such as a primer composition for a metal substrate, are more resistant to hydrolysis than are aliphatics and, therefore, provide enhanced corrosion and moisture resistance. Of course, as also noted above, according to preferred embodiments of the epoxy ester resin, described above, the diepoxide reactant provides aromatic units to the resin and this would similarly contribute to corrosion and moisture resistance.

Other suitable dicarboxylic acids for the epoxy ester resin of the present invention will be apparent to the skilled of the art in view of the present disclosure.

(iv) Acid Component reactant

Numerous suitable hydroxy functional acids will be apparent to the skilled of the art in view of the present disclosure, including many which are readily commercially available. These include $C_3$—$C_{26}$ hydroxy functional acids, wherein the acid contains one carboxyl group and one or more hydroxyl groups and no other functional groups which would substantially interfere with the preparation of the epoxy ester resin, i.e., which would be substantially unreactive with the chain-extension reactants described above and with the chain-extension reaction product. Preferred hydroxy functional acids are primary hydroxy functional acids corresponding to the general chemical formula:

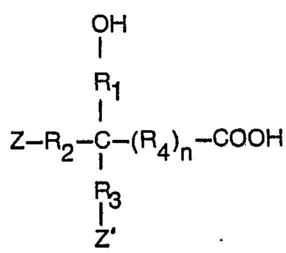

n=0—20

wherein $R_1$, $R_2$, $R_3$ and $R_4$ are the same or different and each preferably is lower alkylene such as methylene and ethylene and Z and Z' are selected independently from hydrogen, hydroxyl, and any other non-interfering functionality such as nitrile ester group, halogen, amide, etc. Suitable hydroxy acids which may be employed in the chain terminating reaction include, but are not limited to, dimethylol propionic acid which is most preferred, bis(hydroxy ethyl) propionic acid, bis(hydroxy propyl) propionic acid, and the like and a compatible mixture of any of them. Preferably, the hydroxy acid contains two or more hydroxyl groups, i.e., at least one of Z and Z' contains a hydroxyl group.

Optionally, the acid component may further comprise fatty acid. Suitable fatty acids include numerous commercially available fatty acids such as, for example, those derived from or contained in either animal or vegetable fat or oil. Preferred are fatty acids from 8 to 18 carbons since these are found to provide flexibility to the cured coating. Also preferred among the fatty acids are the more saturated fatty acids, since it appears that olefinic unsaturation in the fatty acid can undergo a polymerization-type reaction between such double bonds during the synthesis of the epoxy ester resin of the invention. Unsaturated fatty acids are suitable for use, however, such as, for example, oleic acid, linoleic, linolenic or the like and mixtures of those acids, and can be used together with a suitable inhibitor for the polymerization-type reaction such as hydroquinone or the like, of which many are commercially available and will be apparent to the skilled of

the art in view of the present disclosure. In addition, aromatic fatty acids are commercially available and can be employed. Preferred for use are the substantially saturated fatty acids such as Soya fatty acid which is most preferred, and butyric, lauric, palmitic and stearic fatty acids and the like or a compatible mixture of any of them. These are relatively inexpensive and have been found to provide ggood reactivity with the preferred diepoxides described above. For convenience of use, the fatty acids which are semisolid or liquid at room temperature are generally preferred over the solid fatty acids.

The hydroxyl functional epoxy ester resin used in the composition of the present invention can be made according to techniques well known to the skilled of the art. The chain termination reaction occurs either simultaneously with the chain extension of the diepoxide with diphenol or occurs subsequently thereto. If the reactions are carried out sequentially, the chain extension reaction is carried out first. In that case, diepoxide and (i) diphenol, or (ii) both diphenol and dicarboxylic acid are charged into a suitable reactor and heated. The reactants are used in relative proportions to yield a chain extension reaction product bearing two unreacted epoxy groups and preferably substantially no unreacted phenol or carboxyl functionality. Suitable separation techniques are known to the skilled of the art for removal of unused reactants. It should be recognized that to assure rapid and/or more complete reaction, it may be preferred to employ a reaction catalyst. The use of catalyst is found to provide epoxy ester resin which yields coating compositions of advantageous physical properties. Suitable catalysts are commercially available and include any of the well known catalysts for epoxy-phenol reactions and epoxy-carboxy reactions such as, for example, sodium carbonate and lithium neodecanoate which are preferred, and tertiary amines and other organometallic catalysts. Other suitable catalysts will be apparent to the skilled of the art in view of the present disclosure. After completion of the chain extension reaction, the diepoxide reaction product is reacted with the acid component in chain terminating reaction in approximately 1 to 1 equivalent ratio. This ratio is preferred, since excess epoxy could result in gelation of the reaction mixture.

If the reactions are carried out simultaneously, the reactants are used in amounts suitable to yield the desired reaction ratio in view of the relative reactivity of the diphenol, the dicarboxylic acid and the acid component, and in view of the desired molecular weight range for the reaction product.

B. Crosslinking agent

The crosslinking agent employed in the novel solvent based coating compositions of the invention comprises polyfunctional, hydroxy-reactive crosslinking agent selected, preferably, from aminoplast crosslinking agents and blocked polyisocyanate crosslinking agents.

(a) Blocked polyisocyanate Crosslinking Agent

Those embodiments of the novel solvent based coating compositions of the invention employing blocked polyisocyanate crosslinking agents exhibit exceptional shelf stability even when corrosion inhibiting pigments such as zinc chromate are used in high concentrations.

As used herein "blocked polyisocyanate" means an isocyanate compound containing two or more isocyanato groups, each of which has been reacted with a blocking agent which will prevent reaction of the isocyanate group at room temperature with compounds that conventionally react with such groups, and at least some of which will permit that reaction to occur at higher (cure) temperatures. In general, the blocked polyisocyanate may be prepared by reacting a sufficient quantity of an active hydrogen containing blocking agent with the polyisocyanate to insure that substantially no free isocyanato groups are present. The blocking agent may be represented by the formula BH and may be selected from numerous materials, hereinafter discussed, which bear an active hydrogen.

The proper proportion of blocked polyisocyanate crosslinking agent to hydroxy functional epoxy ester resin will depend, in part, upon the properties desired in the coating to be produced and, in part, upon the desired cure response of the coating composition (which will depend, in turn, upon the baking schedule to be used in curing the coating composition) and, in part, upon the desired storage stability of the composition, that is, upon the desired shelf life. Accordingly, the amounts of crosslinker that can be used with the epoxy ester resin varies considerably. Preferably the blocked polyisocyanate crosslinking agent is included in compositions of the invention in amounts such that upon deblocking of the blocked isocyanato groups at the cure temperature of the composition, the crosslinking agent will provide between about .5 and about 1.6, preferably between about .8 and about 1.3, reactive isocyanato groups per reactive group on the film forming resin of the coating composition as described above. Blocked polyisocyanates of numerous types may be employed in the compositions of the invention. Particularly suitable blocked polyisocyanates, which will be discussed further hereinafter, include blocked polymethylene polyphenol isocyanates, isocyanurate ring containing blocked polyisocyanates and certain oligoester modified blocked polyisocyanates.

In the preparation of the blocked polyisocyanate crosslinking agent, any suitable organic polyisocyanate may be used. Representative examples include the aliphatic compounds such as trimethylene, tetramethylene, pentamethylene, hexamethylene, 1,2-propylene, 1,2-butylene, 2,3-butylene, 1,3-butylene, ethylidene and butylidene diisocyanates; the cycloalkylene compounds such as 1,3-cyclopentane, 1,4-cyclohexane, and 1,2-cyclohexane diisocyanates; the aromatic compounds such as m-phenylene, p-phenylene, 4,4'-diphenyl, 1,5-naphthalene, and 1,4-naphthalene diisocyanates, the aliphatic-aromatic compounds such as 4,4'-diphenylene methane, 2,4- or 2,6-tolylene, or mixtures thereof, 4,4'-

toluidine, and 1,4-xylylene diisocyanates; substituted aromatic compounds such as dianisidine diisocyanate, 4,4'-diphenylether diisocyanate and chlorodiphenylene diisocyanate; the triisocyanates such as triphenyl methane-4,4'4''-triisocyanate, 1,3,5-triisocyanate benzene and 2,4,6-triisocyanate toluene; the tetraisocyanates such as 4,4'-diphenyl-dimethyl methane-2,2',5,5'-tetraisocyanate; and the polymerized polyisocyanates such as tolylene diisocyanate dimers and trimers, and the like.

In addition, the organic polyisocyanate may be a prepolymer derived from a polyol including polyether polyol or polyester polyol, including polyethers which are reacted with excess polyisocyanates to form isocyanate-terminated prepolymers. The polyols may be simple polyols such as glycols, e.g., ethylene glycol and propylene glycol, as well as other polyols such as glycerol; tri-methylolpropane, pentaerythritol, and the like, as well as mono-ethers such as diethylene glycol, tripropylene glycol and the like and polyethers, i.e., alkylene oxide condensates of the above. Among the alkylene oxides that may be condensed with these polyols to form polyethers are ethylene oxide, propylene oxide, butylene oxide, styrene oxide and the like. These are generally called hydroxyl-terminated polyethers and can be linear or branched. Examples of polyethers include polyoxyethylene glycol, polyoxypropylene glycol, polyoxytetramethylene glycol, polyoxyhexamethylene glycol, polyoxynonamethylene glycol, polyoxydecamethylene glycol, polyoxydodecamethylene glycol and mixtures thereof. Other types of polyoxyalkylene glycol ethers can be used. Especially useful polyether polyols are those derived from reacting polyols such as ethylene glycol, diethylene glycol, triethylene glycol, 1,4-butylene glycol, 1,3-butylene glycol, 1,6-hexanediol, and their mixtures; glycerol, trimethylolethane, trimethylolpropane, 1,2,6-hexanetriol, pentaerythritol, dipentaerythritol, tripentaerythritol, polypentaerythritol, sorbitol, methyl glucosides, sucrose and the like with alkylene oxides such as ethylene oxide, propylene oxide, their mixtures, and the like.

A particular class of aromatic polyisocyanates which may be employed in the novel solvent based coating compositions of the invention are polymethylene polyphenol isocyanates having the formula:

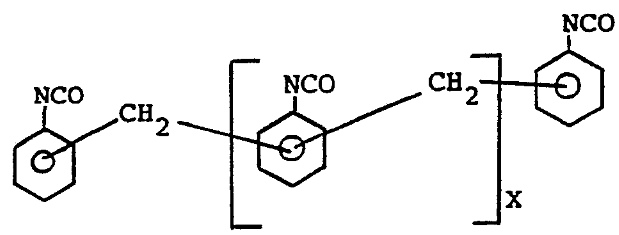

wherein x equals 1 to 3. The compounds, sold under the tradename "PAPI" by the Upjohn Chemical Company of Kalamazoo, Michigan, are particularly useful in compositions of the invention, resulting in compositions exhibiting desirable toughness in the final cured coating.

The active hydrogen containing blocking agents which are reacted with the above described organic diisocyanates may be selected from numerous blocking agents which will be apparent to those skilled in this art. Preferred blocking agents include, for example, those selected from the group consisting of (i) aliphatic, cycloaliphatic and aromatic alkyl monoalcohols; (ii) hydroxyl amines; (iii) oximes; (iv) lactams; and (v) triazoles. Any suitable aliphatic , cycloaliphatic or aromatic alkyl monoalcohol may be used as a blocking agent in accordance with the present invention. For example, aliphatic alcohols, such as methyl, ethyl, chloroethyl, propyl, butyl, amyl, hexyl, heptyl, octyl, nonyl, 3,3,5-trimethylhexyl, decyl, and lauryl alcohols, and the like may be employed. Suitable cycloaliphatic alcohols include, for example, cyclopentanol, cyclohexanol and the like, while aromatic-alkyl alcohols include phenylcarbinol, methylphenylcarbinol, and the like. Minor amounts of even higher molecular weight relatively non-volatile monoalcohols may be used, if desired, to serve as plasticizers in the coatings provided by the invention. Examples of hydroxyl amines which may be employed as blocking agents include ethanol amine and propanol amine. Suitable oxime blocking agents include, for example, methylethylketone oxime, acetone oxime and cyclohexanone oxime. Examples of lactams which may be used as blocking agents are ε-caprolactam, γ-butyrolactam and pyrrolidone, while suitable triazoles include compounds such as 1,2,4-triazole, 1,2,3-benzotriazole, 1,2,3-tolyl triazole and 4,5-diphenyl-1,2,3-triazole. Particularly preferred active hydrogen containing blocking agents are methylethyl ketoxime and 2-ethylhexanol.

(i) Isocyanurate Ring Containing Blocked Isocyanate Compounds

Within the scope of the above general class of blocked polyisocyanate crosslinking agents, a particular class or type of blocked polyisocyanate crosslinking agent which may be employed in the novel solvent based coating compositions of the invention comprises isocyanurate ring containing blocked isocyanate compounds. In general, these blocked polyisocyanates may be formed by blocking with the aforementioned blocking agents. These compounds may be formed by cyclotrimerization of difunctional isocyanates. Usually, the reaction does not stop in this stage and continues through the formation of polyfunctional oligomers or a mixture of such oligomers with a portion of the pure trifunctional polyisocyanate. Mixtures of trifunctional product and various polyfunctional oligomers are commercially available.

A particularly desirable blocked polyisocyanate crosslinking agent is the blocked form of the pure trifunctional isocyanurate represented by the following formula:

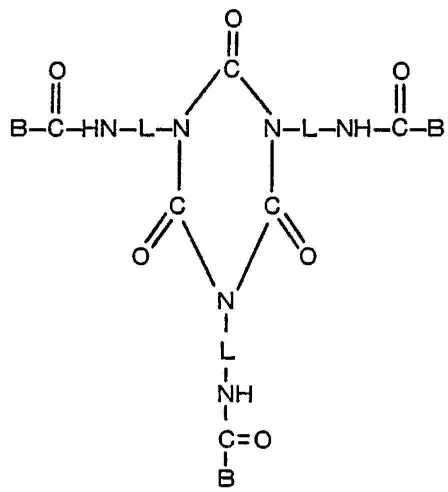

wherein each L is selected independently from the group consisting of aliphatic, cycloaliphatic and aromatic groups and combinations thereof and B is the residue of an active hydrogen containing blocking agent.

(ii) Oligoester Modified Blocked Polyisocyanates

Still further particular blocked polyisocyanates useful as crosslinking agents in the novel solvent based coating compositions of this invention are oligoester modified blocked polyisocyanates prepared from a particular class of oligoester diols and triols. A first type of such oligoester modified blocked polyisocyanate is prepared from organic diisocyanates wherein one isocyanato group is more reactive than the other, with the more reactive isocyanato first being blocked with a blocking agent and the remaining isocyanato group then being reacted with hydroxyl functionality of an oligoester diol or triol as referred to above. The second type of oligoester modified blocked polyisocyanate may be prepared by reacting oligoester diols from the aforementioned class of oligoesters with an excess of organic diisocyanate so as to form an isocyanato terminated prepolymer followed by blocking of the terminal isocyanto groups of the prepolymer with an active hydrogen containing blocking agent. Each of these materials is particularly useful in the compositions of the invention and produces final cured coating compositions exhibiting outstanding flexibility.

Oligoesters of the type employed in the preparation of these crosslinking agents are described in United States Patent No. 4,322,508 issued March 30, 1982.

The hydroxy functional oligoesters within the useful class of materials (i) have a number average molecular weight (Mn) between about 150 and about 3000, preferably between about 230 and about 1000, (ii) bear 2 or 3 hydroxyl groups per molecule, and (iii) are formed by an esterification reaction between a carboxylic acid and an epoxide. The esterification reaction products are selected from the group consisting of:

(a) the estrification reaction product of polycarboxylic acid, i.e., carboxylic acid bearing 2 or more carboxyl groups, and monoepoxide;

(b) the esterification reaction product of polyepoxide, i.e., a compound having 2 or more epoxide groups, and monocarboxylic acid, preferably containing no ethylenic unsaturation, and bearing no hydroxy functionality;

(c) the esterification reaction product of hydroxy functional carboxylic acid and mono- or polyepoxide, preferably monoepoxide;

(d) the esterification reaction product of monocarboxylic acid and hydroxy functional mono- or polyepoxide, preferably monoepoxide; and

(e) mixtures (a) — (d).

As noted above, the first type of oligoester modified blocked polyisocyanate crosslinking agent is prepared by (i) reacting organic diisocyanate bearing one isocyanato group which is more reactive than the other with a sufficient amount of an active hydrogen containing blocking agent to react substantially with all of the more reactive isocyanate groups, thus providing a half-blocked diisocyanate and (ii) reacting this half-blocked intermediate with the above discussed oligoester. The organic diisocyanates employed in this synthesis, as well as the active hydrogen containing blocking agents, are discussed above in connection with the preparation of the isocyanurate ring containing blocked isocyanate crosslinking agents useful in compositions of the invention. The organic polyisocyanate-blocking agent adduct intermediate is formed by reacting a sufficient quantity of the blocking agent with the organic diisocyanate to insure that one of the two —NCO groups on the diisocyanate is reacted. The reaction between the organic diisocyanate and the

blocking agent is exothermic and the diisocyanate and the blocking agent are preferably admixed at temperatures no higher than about 80°C, preferably below about 50°C, to minimize the exothermic effect.

The diisocyanate/blocking agent intermediate is next reacted with the oligoester diol or triol described above so as to react substantially all free or unblocked isocyanato groups of the intermediate with hydroxyl groups of the oligoester. This reaction is carried out desirably at a temperature of about 80°—120°C.

As also discussed above, the second type of oligoester modified blocked polyisocyanate crosslinking agent useful in the novel solvent based coating compositions of the invention is prepared by reacting an excess of organic diisocyanate with an oligoester diol from the above described class of oligoesters followed by reaction of the terminal isocyanato groups formed on the resultant prepolymer with an active hydrogen containing blocking agent as described above so as to react with substantially all the isocyanato groups. The diisocyanate starting material is used in excess in amounts sufficient to insure that the intermediate is isocyanate terminated. Therefore, it is preferable that the organic diisocyanate and the dihydroxy functional oligoester be reacted in a molar ratio of from greater than 1:1 up to 2:1. Numerous diisocyanates of the type described hereinbefore may be employed in the preparation of this intermediate. While it is not necessary that one isocyanato group be more reactive than the other, the preparation of this type of crosslinking agent does not preclude the use of such material.

(b) Aminoplast Crosslinking Agent

According to alternative embodiments of the invention, the novel solvent based coating compositions employ hydroxy-reactive polyfunctional aminoplast crosslinking agents. It will be recognized that compatible combinations of suitable polyfunctional aminoplast crosslinking agent(s) and blocked polyisocyanate crosslinking agent(s) also can be used. Included within the aminoplast crosslinking agents suitable for use in the coating composition are numerous materials which are well known to the skilled of the art including, for example, alkylated melamine formaldehyde resins with one to about eight carbon atoms in the alkyl moiety. Other suitable aminoplast crosslinking agents will be apparent to the skilled of the art in view of the present disclosure. Many such crosslinking agents are readily commercially available including, for example, the Resimene (trademark) series, Monsanto Company, St. Louis, Missouri, the most preferred being Resimene 717 (trademark), described as a low temperature cure methylated malamine-formaldehyde resin.

In addition, suitable polyfunctional aminoplast crosslinking agents can be prepared employing conventional techniques. Accordingly, for example, a lower alkanol such as methanol, ethanol, butanol, isobutanol, isopropanol, hexanol, 2-ethylhexanol or the like or a mixture of any of them is reacted with a melamine formaldehyde. Preferred crosslinking agents of this type include butylated melamine formaldehyde resin, methylated/butylated formaldehyde resin and polyalkyl hexamethoxymethyl melamine resin which is most preferred in view of its relatively lower cost, ready commercial availability, and its low reactivity with the hydroxy functional epoxy ester resin of the invention at non-elevated temperatures. In this regard, preferred polyfunctional aminoplast crosslinking agent is substantially unreactive with the epoxy ester resin at or below about 60°C. Other suitable aminoplast crosslinking agents will be apparent to the skilled of the art in view of the present disclosure.

The proper proportion of polyfunctional aminoplast crosslinking agent to epoxy ester resin will depend, in part, upon the properties desired in the coating to be produced and, in part, upon the desired cure response of the coating composition (which will depend, in turn, upon the baking schedule intended for curing the coating composition) and, in part, upon the desired storage stability of the coating composition, that is, upon the desired shelf life. Accordingly, the amounts of epoxy ester resin that can be blended with the crosslinker to form coating compositions of the invention may be varied considerably. Preferably, the crosslinking agent is used in amounts of about 5% to about 40% by weight of the total resin solids, more preferably about 20% to about 30%.

C. General Discussion — Other Aspects of the Invention and Other Components

The coating compositions of the invention provide a cured coating having the advantageous physical properties described above, over a wide range of cure temperatures and a wide range of solids levels. More specifically, the coating compositions according to preferred embodiments of the invention cure at temperatures from as low as about 120°C or less within about 15 minutes or less, and yet to cure and suffer no significant loss of advantageous physical properties at temperatures as high as about 200°C or more for periods up to about 60 minutes or more. Considered together with the good storage stability of the coating composition, it can be readily recognized that the present invention provides a significant advance in the coating composition art.

It will be within the skill of the art to determine the proper volatile organic content for a given coating composition of the invention and for a given application. Preferred solvents have relatively low volatility at temperatures appreciably below their boiling points such that solvent evaporation is low during storage and during application of the coating composition to the substrate. A suitable solvent system may include, for example, toluene, methyl ethyl ketone, isobutyl acetate, xylene, cellosolve acetate, acetone and a mixture of any of them. Other solvents which may be employed include terpenes, aliphatic and aromatic naphthas, and the like. Additional suitable solvents are commercially available and will be apparent to the skilled of the art in view of the present disclosure. Where the composition is to be formulated as a higher

solids content primer composition employing aminoplast crosslinking agent, it generally is preferred to employ a portion of C-1 to C-8 alcohol solvent such as, for example, butanol, pentanol, hexanol, and the like or a mixture of any of them since these inhibit the crosslinking reaction of the polyfunctional aminoplast resin with the epoxy ester resin at room temperature and thereby improve storage stability. At elevated temperature during cure, the alcohol solvent evaporates and, hence, ceases to inhibit the crosslinking reaction. Preferred solvents also include, for example, methyl amyl ketone and the like, or a mixture thereof with C—1 to C—8 alcohol such as, for example, a 1:2 mixture by weight of butanol and methyl amyl ketone, respectively.

Any solvent allowed to remain in the cured coating should be inert so as to avoid adverse effect upon the cured coating or upon another coating layer used in conjunction with it during the curing process or thereafter. Preferably, the cured coating is substantially free of solvent.

Sufficient solvent is used to reduce the viscosity of the coating composition to a level suitable for application to the substrate in the desired manner. It can be applied by any conventional method, including brushing, dipping, flow coating, spraying, etc. Spraying will generally be preferred, for example, for applying the compositions as an automotive primer.

Also preferably included in compositions of the invention employing aminoplast crosslinking agent is any of a variety of acid catalyst known to the skilled of the art to catalyse the aminoplast crosslinking reaction, for example, p-toluenesulfonic acid, phosphoric acid, phenyl acid phosphate, butyl phosphate, butyl maleate, and the like or a compatible mixture of any of them. Such acid catalyst is most useful for coating compositions intended for low temperature curing schedules and/or when highly etherified melamine resins are used such as hexa(methoxymethyl) melamine or the like. Such catalyst are used in amounts which depend, in part, upon the intended baking (curing) schedule. Typically, amounts of about 0.2% to about 3.% are used, more preferably about 0.4% to about 0.6% by weight of total resin solids. In addition to catalyst, flow control agents(s), for example, polybutyl acrylate; wetting agent(s), for example, silicone; pigments; pigment dispersants; corrosion inhibitors, for example, chromate pigments, numerous of all of which are known to the skilled of the art, may be employed in the coating compositions of the invention. In addition, suitable reactive additives can be used, including, for example, low molecular weight diol flow control agents and reactive diluents.

Compositions of the invention, and in particular primers of higher solids content, also may include anti-settling or anti-sagging agents to control the thixotropic properties of the composition. Exemplary of available materials suitable for this purpose are Dislon (trademark) 6900—20X manufactured by Kusumoto Chemicals, Ltd., Tokyo, Japan and sold by King Industries, Norwalk, CT 06852; Bentone (trademark) 38, N. L. Industries, Highstown, New Jersey; and Cap-0-Sil (trademark) M—5, Cabot Corporation.

Curing the coating composition requires baking for sufficient time at sufficiently elevated temperature to react the crosslinking agent with the hydroxy functionality of the epoxy ester resin. The time and temperature required to cure the coating are interrelated and depend upon the particular epoxy ester resin, crosslinking agent, solvent and other materials, if any, and the amount of each comprising the coating composition. The coating compositions according to preferred embodiments of the invention, as described above, are found to provide best coating results when cured at temperature at about 300°F for about 20 minutes. It is a highly significant advantage of the invention, however, that these same coating compositions can withstand, for example, temperature as high as about 200°C (390°F) for periods of time as long as about 60 minutes. Accordingly, great flexibility is provided in both designing and implementing a curing schedule for parts coated with the coating compositions of the invention. Thus, in the assembly of automotive vehicles, for example, vehicles unavoidably held in a curing oven for long periods of time during unplanned assembly line shut-downs are recovered with cured and unharmed coatings.

Coating compositions according to the present invention, comprising the novel crosslinkable hydroxy functional epoxy ester resin of the invention and blocked polyisocyanate crosslinking agent, especially the preferred materials described above, are found to afford cured coatings with improved corrosion resistance, thus representing a significant advance in the art. A most preferred use of the coating composition of the invention is as a sprayable primer for use on a bare metal substrate such as a household or industrial appliance housing or an automotive vehicle body. Primer compositions typically are pigmented and any pigments commonly included in primer compositions for metal substrates and acrylic dispersion topcoats such as, for example, carbon black, iron oxide, lithopone, magnesium, silicate, silica, barium sulfate, $TiO_2$, chrome yellow, calcium chromate, strontium chromate, zinc potassium chromate any the like may be used. The primer can be pigmented according to known methods including, for example, by grinding pigments in a portion of the curable resin and adding to the primer composition. The pigment-to-binder ratio of the primer may be as much as 4:1 by weight, respectively. It is preferred, however, to use a primer having a pigment-to-binder ratio of about 1:1 to 2:1 by weight, respectively.

No special expedients are necessary in formulating the primer compositions of this invention. For example, they may be prepared simply by incorporating the resinous components in a suitable solvent system. Thus, for example, by suitable mixing or agitation, each resinous component may be dissolved in a solvent and the resulting solutions combined to form finished primer compositions.

The solvent system may be any suitable combination of organic solvents as described above. For a sprayable automotive vehicle primer the solvent will comprise preferably about 25 to about 35 percent by

weight of the total coating compositions although, of course, larger or smaller amounts may be utilized depending upon the solids content desired.

The primer is generally thinned to from about 65 to about 70 percent solids content for spraying purposes with conventional thinners such as aromatic hydrocarbons, commercial petroleum cuts which are essentially aromatic, and the like, and sprayed on to the metal base and cured. The primer is cured at elevated temperatures by any convenient means such as baking ovens or banks of infrared heat lamps. Curing temperatures are preferably from about 135°C to about 165°C, although curing temperatures from about 100°C to about 230°C may be employed, if desired.

The invention will be further understood by referring to the following detailed examples. It should be understood that the specific examples are presented by way of illustration and not by way of limitation. Unless otherwise specified, all references to "parts" are intended to mean parts by weight.

Examples I through V illustrate the preparation of epoxy ester resin using both diphenol and dicarboxylic acid chain extension reactants.

Example I

This example illustrates the preparation of an epoxy ester resin according to the present invention. In a suitable reactor are charged 1248 parts of Epon 829 (trademark, Shell Chemical Co.) 342 parts of bisphenol-A, and 463 parts of Empol 1014 (trademark, Emery Industries, Inc.; dimer acid). The temperature of the mixture is brought up to about 177°C (350°F) at which point an exothermic reaction takes place that raises the temperature to about 193°C (380°F). After two hours at this temperature, the acid number is 2. The mixture is then cooled down to about 300°F and 700 parts of Soya fatty acid, 335 parts of dimethylol propionic acid and 18 parts of lithimum neodecanoate are added. The temperature of the mixture is then brought up to about 350°F. After 5 hours at this temperature, the acid number is found to be 6.9. The reaction mixture is then cooled down to 149° (300°F) and 909 parts of methyl amyl ketone are added. The resulting resin has a viscosity of W at 80% solids.

Examples II—V

Epoxy ester resins according to the invention are prepared in the manner described below. The components employed are shown in Table I. The diepoxide, diphenol, dicarboxylic acid, fatty acid and hydroxy functional acid, with catalyst (sodium carbonate), if any, are charged in a suitable reaction. The mixture is heated up to about 177°C (350°F). At this point, exothermic reaction takes place that brings the temperature up to about 188°—199°C (370°—390°F). The reaction is continued at this temperature until the acid number drops below 8. Then the product is cooled down to about 121°C (250°F) and thinned to 80% non-volatiles by weight with methyl amyl ketone. In Table I, all amounts are shown in parts by weight.

\BLE I

| | Example | | | |
|---|---|---|---|---|
| | II | III | IV | V |
| Epon 829[1] | 1248 | 1248 | | |
| DER 333[2] | | | 1248 | |
| Araldide RD-2 | | | | 884 |
| Empol 1016[3] | 463 | 463 | 463 | 463 |
| Bisphenol A | 342 | 342 | 342 | 342 |
| Dimethylol Propanic Acid | 675 | 337 | 675 | 337 |
| Pamolyn 200[4] | | 700 | | |
| Soya Fatty Acid | | | | 700 |
| Sodium Carbonate | | | | 2.3 |
| Methyl Amyl Ketone | 682 | 772 | 682 | 506 |
| % Non-Volatiles | 80.0 | 79.8 | 79.6 | 79.8 |
| Viscosity | X | $W^+$ | $X_1$ | S |
| Acid Number | 5.6 | 4.9 | 5.2 | 5.9 |

[1]Trademark, Shell Chemical Co. (diepoxide; specifically, bisphenol-A epichlorohydrin epoxy resin)
[2]Trademark, Dow Chemical Co. (diepoxide)
[3]Trademark, Emery Industries, Inc. (dimer acid)
[4]Trademark, Hercules Incorporated, Wilmington, Delaware (pale, color-stable high purity grade linoleic acid)

Examples VI through X illustrate the preparation of epoxy ester resin using diphenol chain extension reaction.

### Example VI

In a suitable reactor are charged 1248 parts of Epon 829 (trademark, Shell Chemical Co., diepoxide) and 530 parts of bisphenol-A. The temperature of the mixture is brought up to 177°C (350°F) at which point an exothermic reaction takes place that raises the temperature up to 204°C (400°F). The temperature is kept about 350°F for 30 minutes. The batch is then cooled down to 300°F and 281 parts at dimethylolpropionic acied, 593 parts of Soya fatty acid and 13.2 parts of lithimum neodecanoate are added. The temperature is raised to 350°F and kept there until the acid number drops below 10. The reaction mixture is cooled down to 149° (300°F) and 663 parts of methyl amyl ketone are added. The resulting resin has a viscosity of W at 80% non-volatiles content.

### Examples VII—X

Hydroxy functional epoxy ester resins according to the invention are prepared in the manner described below. The components employed are shown to Table II. The diepoxide, hydroxy functional acid and diphenol, with catalyst (sodium carbonate), if any, are charged in a suitable reactor. The mixture is heated to about 177°C (350°F). At this point, exothermic reaction takes place that brings the temperature up to about 188°—199°C (370°—390°F). The reaction is continued at this temperature until the acid number drops below 6. The product is cooled down to about 121°C (250°F) and thinned to 80% non-volatiles by weight with methyl amyl ketone. In Table II, all amounts are shown in parts by weight.

TABLE II

| | Example | | | |
|---|---|---|---|---|
| | VII | VIII | IX | X |
| Epon 829[1] | 500 | 500 | | |
| DER 333[2] | | | 500 | |
| Araldite RD-2[3] | | | | 268 |
| Bisphenol-A | 212 | 212 | 212 | 159 |
| Dimethylol Propionic Acid | 227 | 113 | 227 | 54 |
| Soya Fatty Acid | | 237 | | |
| Sodium Carbonate | | | | 0.5 |
| Methyl Amyl Ketone | 234 | 265 | 234 | 120 |
| % Non-Volatiles | 80.0 | 79.8 | 79.6 | 79.8 |
| Viscosity | $Z_1$ | Z | $Z_1$ | S |
| Acid Number | 0.9 | 1.1 | 0.9 | 0.9 |

[1]Trademark, Shell Chemical Co. (diepoxide; specifically, bisphenol-A epichlorohydrin epoxy resin)
[2]Trademark, Dow Chemical Co. (diepoxide)
[3]Trademark, Ciba-Geigy Corp. (diepoxide)

Examples XI through XV illustrate the preparation of epoxy ester resin using dicarboxylic chain extension reactant.

Example XI

Into a suitable reactor the following materials are charged:

1240 parts — Epon 829
1300 parts — Epon 1016
840 parts — Soya Fatty Acid
268 parts — Dimethylolpropionic Acid
33 parts — Lithium Neodecanoate (catalyst)

The mixture is heated to 350°F. After four hours the acid number is measured to be 27. At this point Cardura E Ester, 401 parts, is added and the mixture heated at 350°F for one hour. The acid number is then measured to be 1.9. The mixture is cooled and 754 parts of Methyl Amyl Ketone are added. The final resin has a Gardner-Holt viscosity of Z-2 at 81% solids.

Examples XII—XV

Epoxy ester resins according to the invention are prepared in the manner described below. The components employed are shown in Table III. The diepoxide, and dimer acid, hydroxy functional acid, fatty acid, if any, and catalyst, if any, are charged in a suitable reactor. The mixture is heated up to about 177°C (350°F). At this point, exothermic reaction takes place that brings the temperature up to about 188°—199°C (370°—390°F). The reaction is continued at this temperature until the acid number drops below 6. Then the product is cooled down to about 121°C (250°F) and thinned to 80% non-volatiles by weight with methyl amyl ketone. In Table III, all amounts are shown in parts by weight.

TABLE III

| | Example | | | |
|---|---|---|---|---|
| | XII | XIII | XIV | XV |
| Epon 829[1] | 500 | 500 | | |
| DER 333[2] | | | 500 | |
| Araldide RD-2 | | | | 622 |
| Empol 1016 | 309 | 309 | 309 | 564 |
| Dimethylol Propanic Acid | 190 | 95 | 190 | 174 |
| Soya Fatty Acid | | 200 | | 364 |
| Sodium Carbonate | | | | 0.5 |
| Methyl Amyl Ketone | 250 | 276 | 250 | 431 |
| Lithium Neodecanoate | 6 | 6 | 6 | 6 |
| % Non-Volatiles | 80.0 | 79.9 | 79.6 | 79.8 |
| Viscosity | $Z_2$ | Z | $Z_2$ | V |
| Acid Number | 5.2 | 4.8 | 6.1 | 6.8 |

[1]Trademark, Shell Chemical Co. (diepoxide; specifically, bisphenol-A epichlorohydrin epoxy resin)
[2]Trademark, Dow Chemical Co. (diepoxide)

Examples XVI—XVIII

A millbase, that is, a composition pigment paste was prepared by grinding in a ballmill the following mixture:

| Composition | Parts Exp. XVI | Exp. XVII | Exp. XVIII |
|---|---|---|---|
| Barium Sulfate | 1626 | 1626 | 1626 |
| Red Iron Oxide | 60 | 60 | 60 |
| Titanium dioxide | 105 | 150 | 150 |
| Silica | 75 | 75 | 75 |
| Strontium chromate | 99 | 99 | 99 |
| Polyethylene Wax | 48 | 48 | 48 |
| Xylene | 200 | 200 | 200 |
| Toluene | 240 | 240 | 240 |
| Methyl Ethyl Ketoxime | 57 | 57 | 57 |
| Resin of Example I | 264 | | |
| Resin of Example VI | | 264 | |
| Resin of Example XI | | | 264 |

Examples XIX—XXII

Coating compositions according to the invention are prepared, each being adapted for use as a high solids, sprayable, pigmented primer for application over bare, unpolished steel automotive vehicle body panels in an automobile vehicle assembly operation. The coating composition components are shown in Table IV, below. Each coating composition is reduced with methyl amyl ketone to about 18—25 sec. #4 Ford Cup, 27°C (80°F) to provide a preferred spraying viscosity. It will be noted that use of a drier, as in

Examples XIX, XX and XXI, is optional, to catalyse reaction of fatty acid double bonds to provide additional crosslinking in the cured resin. In Table IV, all amounts are expressed in parts by weight.

TABLE IV

| | Example XIX | XX | XXI | XXII |
|---|---|---|---|---|
| Epoxy Ester Resin of Example I | 270 | 270 | 270 | 270 |
| Phenyl acid phosphate | --- | 1 | --- | --- |
| PTSA | --- | --- | 1 | 1 |
| Millbase of Example XVI | 800 | 800 | 800 | 800 |
| Resimine 717[1] | 110 | 110 | --- | --- |
| Cymel 325[2] | --- | --- | 110 | --- |
| Cymel 303[3] | --- | --- | --- | 93 |
| 6% Manganese Naphthanate (Drier) | 4 | 4 | 4 | --- |
| Butanol | 35 | 35 | 35 | --- |

[1]Trademark, Monsanto Co., St. Louis, MO (low temperature, high solids methylated melamine-formaldehyde resin cross- linking agent).
[2]Trademark, American Cyanamid, Wayne, New Jersey, (highly methylated melamine formaldehyde resin).
[3]Trademark, American Cyanamid, Wayne, New Jersey, (hexa(methoxymethyl)melamine).

Examples XXIII—XXVI

Coating compositions according to the invention are prepared, each being adapted for use as a sprayable, pigmented primer for application over bare, unpolished steel automobile vehicle body panels in an automotive vehicle assembly operation. The coating composition components are shown in Table V, below. Each coating composition was reduced with methyl amyl ketone to about 18—25 sec, #4 Ford Cup, 27°C (80°F) to provide a preferred spraying viscosity. It will be noted that use of a drier, as in Examples XXIII, XXIV and XXV, is optional, to catalyse reaction of fatty acid double bonds to provide additional crosslinking in the cured resin. In Table V, all amounts are expressed in parts by weight.

TABLE V

| | Example | | | |
|---|---|---|---|---|
| | XXIII | XXIV | XXV | XXVI |
| Epoxy Ester Resin of Example VI | 270 | 270 | 270 | 270 |
| Phenyl acid phosphate | --- | 1 | --- | --- |
| PTSA | --- | --- | 1 | 1 |
| Millbase of Example XVII | 800 | 800 | 800 | 800 |
| Resimine 717[1] | 110 | 110 | --- | --- |
| Cymel 325[2] | --- | --- | 110 | --- |
| Cymel 303[3] | --- | --- | --- | 93 |
| 6% Manganese Naphthanate (Drier) | 4 | 4 | 4 | --- |
| Butanol | 35 | 35 | 35 | --- |

[1]Trademark, Monsanto Co., St. Louis, MO (low temperature, high solids methylated melamine-formaldehyde resin crosslinking agent).
[2]Trademark, American Cyanamid, Wayne, New Jersey, (highly methylated melamine formaldehyde resin).
[3]Trademark, American Cyanamid, Wayne, New Jersey, (hexa(methoxymethyl)melamine).

Examples XXVII—XXX

Coating compositions according to the invention are prepared, each being adapted for use as a high solids, sprayable, pigmented primer for application over bare, unpolished steel automotive vehicle body panels in an automobile vehicle assembly operation. The coating composition components are shown in Table VI, below. Each coating composition is reduced with methyl amyl ketone to about 18—25 sec, #4 Ford Cup, 27°C (80°F) to provide a preferred spraying viscosity. It will be noted that use of a drier, is optional to catalyse reaction of fatty acid double bonds to provide additional crosslinking in the cured resin. In Table VI, all amounts are expressed in parts by weight.

TABLE VI

| | Example | | | |
|---|---|---|---|---|
| | XXVII | XXVIII | XXIX | XXX |
| Epoxy Ester Resin of Example XI | 270 | 270 | 270 | 270 |
| Phenyl acid phosphate | --- | 1 | --- | --- |
| PTSA | --- | --- | 1 | 1 |
| Millbase of Example XVIII | 800 | 800 | 800 | 800 |
| Resimine 717[1] | 110 | 110 | --- | --- |
| Cymel 325[2] | --- | --- | 110 | --- |
| Cymel 303[3] | --- | --- | --- | 93 |
| 6% Manganese Naphthanate (Drier) | 4 | 4 | 4 | --- |
| Butanol | 35 | 35 | 35 | --- |

[1]Trademark, Monsanto Co., St. Louis, MO (low temperature, high solids methylated melamine-formaldehyde resin crosslinking agent).
[2]Trademark, American Cyanamid, Wayne, New Jersey, (highly methylated melamine formaldehyde resin).
[3]Trademark, American Cyanamid, Wayne, New Jersey, (hexa(methoxymethyl)melamine).

Examples XXXI—XXXIV

Additional coating compositions according to the invention, each adapted for use as a high solids, sprayable pigmented primer for application over, for example, bare, unpolished steel automotive vehicle body panels in an automotive vehicle assembly operation, are prepared as shown in Table VII, below. It should be noted that use of a drier, as in the coating compositions illustrated in Examples XXXIII and XIV, is optional. The epoxy ester resin employed in each coating composition is identified by reference to the Example according to which it was prepared. All amounts are expressed in parts by weight.

TABLE VII

| | Example | | | |
|---|---|---|---|---|
| | XXXI | XXXII | XXXIII | XXXIV |
| | Exp. II | Exp. III | Exp. IV | Exp. V |
| Epoxy Ester Resin | 270 | 270 | 270 | 270 |
| Phenyl acid phosphate | 1 | 1 | 1 | 1 |
| Millbase of Exp. XVI | 800 | 800 | 800 | 800 |
| Resimine 717[1] | 110 | 110 | 110 | 110 |
| 6% Manganese Naphthanate (Drier) | | | 4 | 4 |
| Butanol | 35 | 35 | 35 | 35 |

[1]Trademark, Monsanto Co., St. Louis, MO (low temperature, high solids methylated melamine-formaldehyde resin crosslinking agent).

Examples XXXV—XXXVIII

Additional coating compositions according to the invention, each adapted for use as a sprayable pigmented primer for application over, for example, bare, unpolished steel automotive vehicle body panels in an automotive vehicle assembly operation, are prepared as shown in Table VIII, below. It should be noted that use of a drier, as in the coating compositions illustrated in Table VIII, is optional. The epoxy ester resin employed in each coating composition is identified by reference to the Example according to which it was prepared. All amounts are expressed in parts by weight.

TABLE VIII

| | Example | | | |
|---|---|---|---|---|
| | XXXV | XXXVI | XXXVII | XXXVIII |
| | Exp. VII | Exp. VIII | Exp. IX | Exp. X |
| Epoxy Ester Resin | 270 | 270 | 270 | 270 |
| Phenyl acid phosphate | 1 | 1 | 1 | 1 |
| Millbase of Exp. XVII | 800 | 800 | 800 | 800 |
| Resimine 717[1] | 110 | 110 | 110 | 110 |
| 6% Manganese Naphthanate (Drier) | 4 | 4 | 4 | 4 |
| Butanol | 35 | 35 | 35 | 35 |
| Polybutyl acrylate | 3 | 3 | 3 | 3 |
| Butyl Cellosolve Acetate[2] | 15 | 15 | 15 | 15 |

[1]Trademark, Monsanto Co., St. Louis, MO (low temperature, high solids methylate melamine-formaldehyde resin crosslinking agent).

[2]Trademark, Union Carbide Corporation, New York, New York (ethylene glycol monobutyl ether acetate).

Examples XXXIV—XXXXII

Coating compositions according to the invention, each adapted for use as a sprayable pigmented primer for application over, for example, bare, unpolished steel automotive vehicle body panels in an automotive vehicle assembly operation, are prepared as shown in Table IX, below. It should be noted that use of a drier, as in some of the coating compositions illustrated in Table IX, is optional. The epoxy ester resin employed in each coating composition is identified by reference to the Example according to which it was prepared. All amounts are expressed in parts by weight.

TABLE IX

| | Example | | | |
|---|---|---|---|---|
| | XXXIX | XXXX | XXXXI | XXXXII |
| | Exp. XII | Exp. XIII | Exp. XIV | Exp. XV |
| Epoxy Ester Resin | 270 | 270 | 270 | 270 |
| Phenyl acid phosphate | 1 | 1 | 1 | 1 |
| Millbase of Exp. XVIII | 800 | 800 | 800 | 800 |
| Resimine 717[1] | 110 | 110 | 110 | 110 |
| 6% Manganese Naphthanate (Drier) | | 4 | | 4 |
| Butanol | 35 | 35 | 35 | 35 |

[1]Trademark, Monsanto Co., St. Louis, MO (low temperature, high solids methylate melamine-formaldehyde resin crosslinking agent).

Example XXXXIII

A blocked isocyanate crosslinker useful in compositions of the inventions was prepared. In a suitable reactor, 417 parts of PAPI 580 (trademark, The Upjohn Company Kalamazoo, Michigan) were charged under a nitrogen blanket. 261 parts of methyl amyl ketoxime were added dropwise in a period of 30 minutes keeping the temperature below 210°F by external cooling. After the addition is completed, the temperature was maintained at 210°F for an additional hour at which time the complete reaction of the isocyanate was verified by I.R. The batch was then thinned with 226 parts of methyl amyl ketone. The resulting resin had a viscosity of $Z_{6+}$ at 75% solids.

Examples XXXXIV—XXXXVII

Blocked isocyanate crosslinking agents useful in compositions of the invention were prepared in the manner generally described in Example XXXXIII from the components shown in Table X.

TABLE X

| | Example | | | |
|---|---|---|---|---|
| | XXXXIV | XXXXV | XXXXVI | XXXXVII |
| Dezmodur L-2291A[1] | 360 | 360 | | |
| PAPI - 27[2] | | | 399 | |
| Dezmodur IL[3] | | | | 525 |
| Methyl amyl ketoxime | 174 | | 261 | 87 |
| Benzotriazole | | 238 | | |
| Methyl amyl ketone | 133 | 150 | 220 | |
| % Non-Volatiles | 80.0 | 80.1 | 75.1 | 57 |
| Viscosity | $Z_{1-1/2}$ | $Z_7$ | $Z_2$ | Z |

[1]Trademark, Mobay Chemical Corporation (Pittsburgh, Pennsylvania)
[2]Trademark, The Upjohn Company (Kalamazoo, Michigan)
[3]Trademark, Mobay Chemical Corporation (Pittsburgh, Pennsylvania)

Examples XXXXVIII—LII

Coating compositions according to the invention are prepared, each being adapted for use as a high solids, sprayable, pigmented primer for application over bare, unpolished steel automotive vehicle body panels in an automotive vehicle assembly operation. The coating composition components are shown in Table XI below. Each coating composition is reduced with methyl amyl ketone to about 18—25 sec. #4 Ford Cup, 27° (80°F) to provide a preferred spraying viscosity. It will be noted that use of a drier is optional, to catalyse reaction of fatty acid double bonds to provide additional crosslinking in the cured resin. In Table XI, all amounts are expressed in parts by weight.

TABLE XI

| Composition | Example XXXXVIII | XXXXIX | L | LI | LII |
|---|---|---|---|---|---|
| Epoxy Ester Resin of Example I | 270 | 270 | 270 | 270 | 270 |
| Millbase of Exp. XVI | 800 | 800 | 800 | 800 | 800 |
| Crosslinker of Exp. XXXXIII | 125 | | | | |
| Crosslinker of Exp. XXXXIV | | 115 | | | |
| Crosslinker of Exp. XXXXV | | | 115 | | |
| Crosslinker of Exp. XXXXVI | | | | 125 | |
| Crosslinker of Exp. XXXXVII | | | 162 | | |
| 6% manganese naphthanate (drier) | 4 | | | | |
| dibutyl tin dilaurate | 1 | 1 | 1 | 1 | |
| N-methyl pyrolidone | 20 | 20 | 20 | 20 | 20 |

Examples LIII—LVII

Coating compositions according to the invention are prepared, each being adapted for use as a high solids, sprayable, pigmented primer for application over bare, unpolished steel automotive vehicle body panels in an automotive vehicle assembly operation. The coating composition components are shown in Table XII below. Each coating composition is reduced with methyl amyl ketone to about 18—25 sec. #4 Ford Cup, 27° (80°F) to provide a preferred spraying viscosity. It will be noted that use of a drier is optional, to catalyse reaction of fatty acid double bonds to provide additional crosslinking in the cured resin. In Table XII, all amounts are expressed in parts by weight.

TABLE XII

| Composition | Example LIII | LIV | LV | LVI | LVII |
|---|---|---|---|---|---|
| Epoxy Ester Resin of Example VI | 270 | 270 | 270 | 270 | 270 |
| Millbase of Exp. XVII | 800 | 800 | 800 | 800 | 800 |
| Crosslinker of Exp. XXXXIII | 125 | | | | |
| Crosslinker of Exp. XXXXIV | | 115 | | | |
| Crosslinker of Exp. XXXXV | | | 115 | | |
| Crosslinker of Exp. XXXXVI | | | | 125 | |
| Crosslinker of Exp. XXXXVII | | | | | 162 |
| 6% Manganese Naphthanate (drier) | 4 | | | | |
| dibutyl tin dilaurate | 1 | 1 | 1 | 1 | |
| N-mehtyl pyrolidone | 20 | 20 | 20 | 20 | 20 |

Examples LVIII—LXII

Coating compositions according to the invention are prepared, each being adapted for use as a sprayable, pigmented primer for application over bare, unpolished steel automotive vehicle assembly operation. The coating composition components are shown in Table XIII below. Each coating composition is reduced with methyl amyl ketone to about 18—25 sec. #4 Ford Cup, 27° (80°F) to provide a preferred spraying viscosity. It will be noted that use of a drier is optional, to catalyse reaction of fatty acid double bonds to provide additional crosslinking in the cured resin. In Table XIII, all amounts are expressed in parts by weight.

TABLE XIII

| | Example | | | | |
|---|---|---|---|---|---|
| | LVIII | LIX | LX | LXI | LXII |
| Epoxy Ester Resin of Example XI | 270 | 270 | 270 | 270 | 270 |
| Millbase of Exp. XVIII | 800 | 800 | 800 | 800 | 800 |
| Crosslinker of Exp. XXXXIII | 125 | | | | |
| Crosslinker of Exp. XXXXIV | | 115 | | | |
| Crosslinker of Exp. XXXXV | | | 115 | | |
| Crosslinker of Exp. XXXXVI | | | | 125 | |
| Crosslinker of Exp. XXXXVII | | | | | 162 |
| 6% Manganese Naphthanate (drier) | 4 | | | | |
| dibutyl tin dilaruate | 1 | 1 | 1 | 1 | |
| N-mehtyl pyrolidone | 20 | 20 | 20 | 20 | 20 |

Industrial Applicability

It will be apparent from the foregoing that this invention has industrial applicability as a coating composition, especially as a coating composition for automotive vehicles, household appliances and the like, and other applications where excellent humidity and solvent resistance are needed to provide protection for a substrate, for example a metal substrate, against corrosion, wear and the like.

**Claims**

1. An organic solvent based thermosetting composition comprising:

a) crosslinkable hydroxy functional epoxy ester resin having a number average molecular weight (Mn) between about 1,000 and about 5,000, said resin comprising the reaction product of diepoxide reactant (a) in chain extension reaction with (i) diphenol, or (ii) with dicarboxylic acid and diphenol, substantially simultaneously and (b) in chain termination reaction with acid component comprising hydroxy functional acid; and

b) polyfunctional, hydroxy-reactive crosslinking agent selected from aminoplast crosslinking agent, blocked polyisocyanate crosslinking agent comprising at least two isocyanate groups blocked by reaction with an active hydrogen bearing blocking agent, and a compatible mixture of any of them, said crosslinking agent being included in an amount such that at the cure temperature of the composition said crosslinking agent will provide between about 0.5 and about 1.6 hydroxy reactive groups per hydroxy group contributed by said epoxy ester resin.

2. A solvent based thermosetting composition as claimed in claim 1, wherein said hydroxy functional epoxy ester resin comprises the reaction product of said acid component with said diepoxide reactant previously chain extended with (i) diphenol, or (ii) both diphenol and dicarboxylic acid.

3. The solvent based thermosetting composition as claimed in claim 1 or claim 2, wherein said hydroxy functional epoxy ester resin comprises the reaction product of said diepoxide reactant substantially simultaneously with (a) said acid component and (b) diephenol or both diphenol and dicarboxylic acid.

4. A solvent based, thermosetting composition as claimed in any one of the preceding claims wherein said diepoxide is selected from the group consisting of bisphenol—A epichlorohydrin epoxy resin, hydantoin epoxy resin, cyclic and acyclic aliphati diepoxides, and a compatible mixture of any of them.

5. A solvent based thermosetting composition as claimed in any one of the preceding claims wherein said diphenol reactant has the general formula:

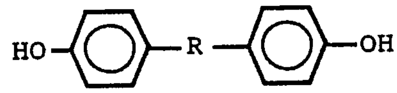

wherein R is a divalent, organic, linking moiety substantially unreactive with said diepoxide and with said acid component.

6. A solvent based thermosetting composition as claimed in claim 5, wherein said diphenol is selected from the group consisting of bisphenol—A, bisphenol—B, and a compatible mixture thereof.

7. A solvent based thermosetting composition as claimed in any one of the preceding claims wherein said dicarboxylic acid is of the general formula:

HOOC—R'''—COOH

wherein R''' is a divalent, linking moiety substantially unreactive with the epoxy functionality of said diepoxide consisting of straight and branched alkylene or alkylidene moieties of about 4 to about 42 carbons.

8. A solvent based, thermosetting composition as claimed in any one of claims 1 to 7 wherein said hydroxy functional acid is selected from those of the general formula:

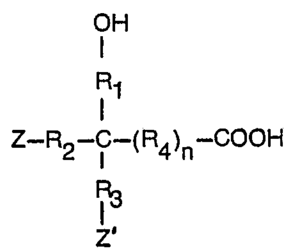

wherein n is 0 to 20; $R_1$, $R_2$,.$R_3$ and $R_4$ are the same or different and each is $C_1$—$C_4$ alkylene; and z and z' are selected independently from H, OH, nitrile ester, halogen and amide.

9. A solvent based thermosetting composition as claimed in claim 8, wherein at least one of z and z' bears an hydroxyl group.

10. A solvent based, thermosetting composition as claimed in any one of claims 1 to 7 wherein said hydroxy functional acid is selected from the group consisting of dimethylolpropionic acid, bis(hydroxy ethyl) propionic acid, bis(hydroxy-propyl) propionic acid, and a compatible mixture of any of them.

11. A solvent based, thermosetting composition as claimed in any one of the preceding claims wherein said acid component further comprises fatty acid, and hydroxy functional acid and said fatty acid, being in molar ratio of from 1:0 to about 1:1, respectively and said fatty acid is selected from the group consisting of Soya fatty acid, butyric, lauric, palmitic and stearic fatty acid and a compatible mixture of any of them.

12. A solvent based, thermosetting composition as claimed in any one of the preceding claims wherein said crosslinking agent consists essentially of blocked polyisocyanate.

13. A solvent based thermosetting composition as claimed in claim 12, wherein said blocked polyisocyanate crosslinking agent comprises blocked polymethylene polyphenol isocyanate which prior to blocking has the formula:

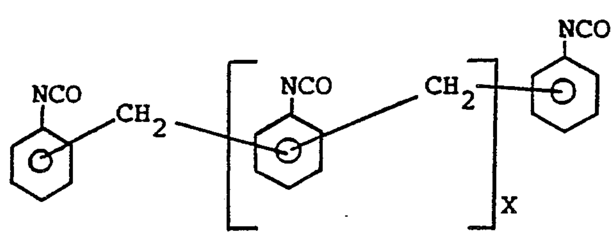

wherein x equals 1 to 3.

14. A solvent based, thermosetting composition as claimed in claim 12, wherein blocked polyisocyanate crosslinking agent is employed which comprises the reaction product of an active hydrogen-bearing blocking agent with polyisocyanate comprising isocyanurate ring-bearing polyisocyanate prepared by cyclotrimerization of diisocyanate.

15. A solvent based thermosetting composition as claimed in claim 12, wherein said polyisocyanate employed in the preparation of said blocked polyisocyanate crosslinking agent comprises an isocyanate terminated prepolymer prepared by reacting polyol with an excess of polyisocyanate.

16. A solvent based, thermosetting as claimed in any one of claims 1 to 11 wherein said crosslinking agent consists of hexa (methoxymethyl) melamine.

**Patentansprüche**

1. Hitzehärtbare Zusammensetzung auf Basis eines organischen Lösungsmittels, enthaltend:

a) vernetzbares hydroxyfunktionelles Epoxyesterharz von einem Zahlenmittelmolekulargewicht (Mn) zwischen etwa 1000 und etwa 5000, welches Harz das Reaktionsprudukt von Diepoxidreaktant (a) in kettenverlängernder Reaktion mit (i) Diphenol oder (ii) mit Dicarbonsäure und Diphenol, im wesentlichen gleichzeitig, und (b) in Kettenterminierungsreaktion mit Säure-Komponente, enthaltend hydroxyfunktionelle Säure, enthält; und

b) polyfunktionelles hydroxyreaktives Vernetzungsmittel, ausgewählt aus Aminoplast-Vernetzungsmittel, blockiertem Polyisocyanat-Vernetzungsmittel, enthaltend mindestens zwei Isocyanatgruppen, blockiert durch Reaktion mit einem aktiven Wasserstoff tragenden Blockierungsmittel, und einem verträglichen Gemisch von jedem dieser, wobei das Vernetzungsmittel in einer Menge enthalten ist, dass bei der Härtungstemperatur der Zusammensetzung das Vernetzungsmittel zwischen etwa 0,5 und etwa 1,6 hydroxyreaktive Gruppen je Hydroxygruppe, die durch das Epoxyesterharz beigesteuert wird, bereitstellen wird.

2. Hitzehärtbare Zusammensetzung auf Lösungsmittelbasis nach Anspruch 1, wobei das hydroxyfunktionelle Epoxyesterharz das Reaktionsproduckt der Säure-Komponente mit dem Diepoxidreaktant enthält, das zuvor mit (i) Diphenol oder (ii) sowohl Diphenol als auch Dicarbonsäure kettenverlängert wurde.

3. Hitzehärtbare Zusammensetzung auf Lösungsmittelbasis nach Anspruch 1 oder 2, wobei das hydroxyfunktionelle Epoxyesterharz das Reaktionsproduckt des Diepoxidreaktanten im wesentlichen gleichzeitig mit (a) der Säure-Komponente und (b) Diphenol oder sowohl Diphenol als auch Dicarbonsäure enthält.

4. Hitzehärtbare Zusammensetzung auf Lösungsmittelbasis nach einem der vorhergehenden Ansprüche, worin das Diepoxid ausgewählt wird aus der Gruppe bestehend aus Bisphenol—A—Epichlorhydrinepoxy-Harz, Hyandtoin-Epoxyharz, cyclischen und acyclischen aliphatischen Diepoxiden und einem verträglichen Gemisch von jedem derselben.

5. Hitzehärtbare Zusammensetzung auf Lösungsmittelbasis nach einem der vorhergehenden Ansprüche, worin das Diphenolreaktant die allgemeine Formel

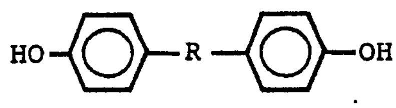

hat, worin R eine zweiwertige, organische vernetzende Gruppe ist, die im wesentlichen unreaktiv mit dem Diepoxid und mit der Säure-Komponente ist.

6. Hitzehärtbare Zusammensetzung auf Lösungsmittelbasis nach Anspruch 5, worin das Diphenol ausgewählt wird aus der Gruppe, die aus Bisphenol—A, Bisphenol—B und einem verträglichen Gemisch derselben besteht.

7. Hitzehärtbare Zusammensetzung auf Lösungsmittelbasis nach einem der vorhergehenden Ansprüche, worin die Dicarbonsäure die allgemeine Formel

$$HOOC—R'''—COOH$$

hat, worin R''' eine zweiwertige vernetzende Gruppe ist, die im wesentlichen unreaktive mit der Epoxyfunktionalität des Diepoxides ist und aus geradkettigen oder verzweigten Alkylen- oder Alkylidengruppen von etwa 4 bis etwa 42 Kohlenstoffatomen besteht.

8. Hitzehärtbare Zusammensetzung auf Lösungsmittelbasis nach einem der Ansprüche 1 bis 7, worin die hydroxyfunktionelle Säure ausgewählt wird aus denen der allgemeinen Formel

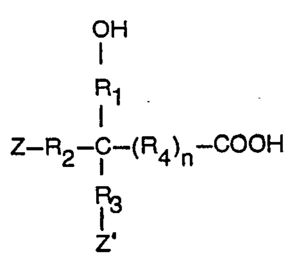

worin n 0 bis 20 ist; $R_1$, $R_2$, $R_3$ und $R_4$ gleich oder ungleich sind und jedes $C_1$—$C_5$-Alkylen ist; und z und z' unabhängig ausgewählt werden aus H, OH, Nitrilester, Halogen und Amid.

9. Hitzehärtbare Zusammensetzung auf Lösungsmittelbasis nach Anspruch 8, worin mindestens eines von z und z' eine Hydroxylgruppe trägt.

10. Hitzehärtbare Zusammensetzung auf Lösungsmittelbasis nach einem der Ansprüche 1 bis 7, worin die hydroxyfunktionelle Säure ausgewählt wird aus der Gruppe bestehend aus Dimethylpropionsäure, Bis(hydroxyethyl)propionsäure, Bis(hydroxypropyl)propionsäure und einem verträglichen Gemisch von jedem dieser.

11. Hitzehärtbare Zusammensetzung auf Loungsmittelbasis nach einem der vorhergehenden Ansprüche, wobei die Säure-Komponente ferner Fettsäure und hydroxyfunktionelle Säure enthält, und die Fettsäure in einem molaren Verhältnis von 1:0 bis etwa 1:1 vorliegt und die Fettsäure ausgewählt wird aus der Gruppe, die aus Sojafettsäure, Buttersäure, Laurinsäure, Palmitinsäure und Stearinfettsäure und einem verträglichen Gemisch jeder dieser besteht.

12. Hitzehärtbare Zusammensetzung auf Loungsmittelbasis nach einem der vorhergehenden Ansprüche, worin das Vernetzungsmittel im wesentlichen aus blockiertem Polyisocyanat besteht.

13. Hitzehärtbare Zusammensetzung auf Lösungsmittelbasis nach Anspruch 12, worin das blockierte Polyisocyanatvernetzungsmittel blockiertes Polymethylenpolyphenolisocyanat enthält, welches vor der Blockierung die Formel hat:

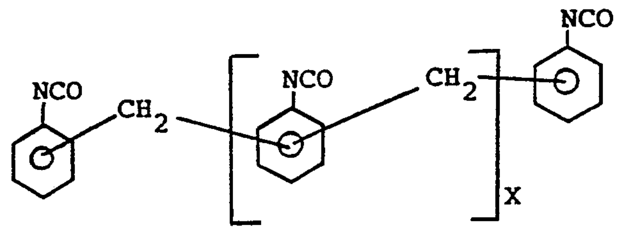

worin x 1 bis 3 ist.

14. Hitzehärtbare Zusammensetzung auf Lösungsmittelbasis nach Anspruch 12, worin blockiertes Polyisocyanatvernetzungsmittel verwendet wird, welches das Reaktionsprodukt von einem aktiven Wasserstoff·tragenden Blockierungsmittel mit Polyisocyanat, enthaltend Isocyanuratring-tragendes Polyisocyanat, hergestellt durch Cyclotrimerisierung von Diisocyanat, enthält.

15. Hitzehärtbare Zusammensetzung auf Lösungsmittelbasis nach Anspruch 12, worin das bei der Herstellung des blockierten Polyisocyanatvernetzungsmittels verwendete Polyisocyanat ein Isocyanatterminiertes Präpolymer enthält, das durch Reaktion von Polyol mit einem Überschuss von Polyisocyanat hergestellt ist.

16. Hitzehärtbare Zusammensetzung auf Lösungsmittelbasis nach einem der Ansprüche 1 bis 11, worin das Vernetzungsmittel aus Hexa(methoxymethyl)melamin besteht.

**Revendications**

1. Une composition thermodurcissable à base de solvant organique, qui comprend:

a) une résine d'époxy ester à fonctionnalité hydroxyle, réticulable, ayant un poids moléculaire moyen en nombre (Mn) compris entre environ 1000 et environ 5000, cette résine comprenant le produit de réaction d'un corps réagissant diépoxyde (a) en réaction d'allongement de chaîne avec (i) un diphénol, ou (ii) avec un acide dicarboxylique et un diphénol, sensiblement simultanément et (b) en réaction de terminaison de chaîne avec un constituant acide comprenant un acide à fonctionnalité hydroxyle; et

b) un agent de réticulation polyfonctionnel, réactif avec le groupe hydroxyle, choisi parmi un agent de réticulation aminoplaste, un agent de réticulation polyisocyanate bloqué comprenant au moins deux groupes isocyanates bloqués par réaction avec un agent de blocage portant de l'hydrogène actif, et un mélange compatible quelconque de ceux-ci, cet agent de réticulation étant incorporé en une quantité telle que, à la température de durcissement de la composition, ledit agent de réticulation fournisse entre environ 0,5 et 1,6 groupe réactif avec le groupe hydroxyle par groupe hydroxyle apporté par la résine d'époxy ester.

2. Une composition thermodurcissable à base de solvant selon la revendication 1, dans lequelle la résine d'époxy ester à fonctionnalité hydroxyle comprend le produit de réaction dudit consistuant acide avec ledit corps réagissant diépoxyde dont la chaîne a été préalablement allongée avec (i) un diphénol, ou (ii) avec à la fois un diphénol et un acide dicarboxylique.

3. La composition thermodurcissable à base de solvant selon la revendication 1 ou 2, dans lequelle la résine d'époxy ester à fonctionnalité hydroxyle comprend le produit de réaction dudit corps réagissant diépoxyde sensiblement simultanément avec (a) ledit constituant acid et (b) un diphénol ou a la fois un diphénol et un acide dicarboxylique.

4. Une composition thermodurcissable à base de solvent selon l'une quelconque des revendications précédentes, dans laquelle ledit diépoxyde est choisi dans le groupe constitué par une résine époxy d'epichlorohydrine et de bisphénol-A, une résine époxy d'hyantoine, les diépoxides cycliques et acycliques aliphatiques, et un mélange compatible quelconque de ceux-ci.

5. Une composition thermodurcissable à base de solvent selon l'une quelconque des revendications précédentes, dans laquelle ledit réagissant diphènol a la formule générale

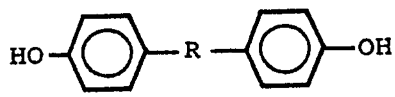

où R est un fragment de jonction organique divalent, sensiblement non réactif avec ledit diépoxyde et avec ledit constituant acide.

6. Une composition thermodurcissable à base de solvent selon la revendication 5, dans laquelle ledit diphénol est choisi dans le groupe forme par le bisphénol-A, le bisphénol-B et un mélange compatible de ceux-ci.

7. Une composition thermodurcissable à base de solvant selon l'une quelconque des revendications précédentes, dans laquelle ledit acide dicarboxylique a la formule générale:

$$HOOC—R'''—COOH$$

où R''' est un fragment de jonction divalent, sensiblement non réactif avec la fonctionnalité époxy dudit diépoxyde constitué de radicaux alkylènee ou alkylidènes, à chaîne droite ou ramifiée, ayant d'environ 4 à environ 42 atomes de carbone.

8. Une composition thermodurcissable à base de solvent selon l'une quelconque des revendications 1 à 7, dans laquelle ledit acide à fonctionnalité hydroxyle est choisi parmi ceux ayant la formule générale:

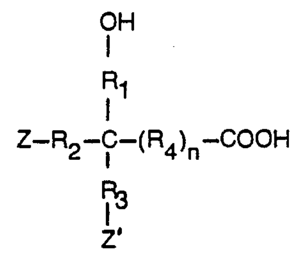

où n est 0 à 20; $R^1$, $R^2$, $R^3$ et $R^4$ sont identiques ou différents et représentent chacun un radical alkylène en $C_1$—$C_4$; et Z et Z' sont choisis indépendamment parmi H, OH, un groupe nitrile ester, halogène et amide.

9. Une composition thermodurcissable à base de solvant selon la revendication 8, dans laquelle au moins l'un de Z et Z' porte un groupe hydroxyle.

10. Une composition thermodurcissable à base de solvant selon l'une quelconque des revendications 1 à 7, dans laquelle l'acide à fonctionnalité hydroxyle est choisi dans le groupe formé par l'acide diméthylol-propionique, l'acide bis(hydroxyéthyl)propionique, l'acide bis(hydroxy-propyl)propionique, et un mélange compatible quelconque de ceux-ci.

11. Une composition thermodurcissable à base de solvant selon l'une quelconque des revendications précédentes, dans laquelle le constituant acide comprend en coutre un acide gras, l'acide à fonctionnalité hydroxyle et l'acide gras étant dans un rapport molaire de 1:0 à environ 1:1, respectivement, et ledit acide gras est choisi dans le groupe formé par l'acide gras de soja, l'acide butyrique, l'acide laurique, l'acide palmitique, l'acide stéarique et un mélange compatible quelconque de ceux-ci.

12. Une composition thermodurcissable à base de solvant selon l'une quelconque des revendications précédentes, dans laquelle l'agent de réticulation consiste essentiellement en polyisocyanate bloqué.

13. Une composition thermodurcissable à base de solvant selon la revendication 12, dans laquelle l'agent de réticulation polyisocyanate bloqué comprend du polyméthylène polyphénol isocyanate bloqué qui, avant le blocage, a la formule:

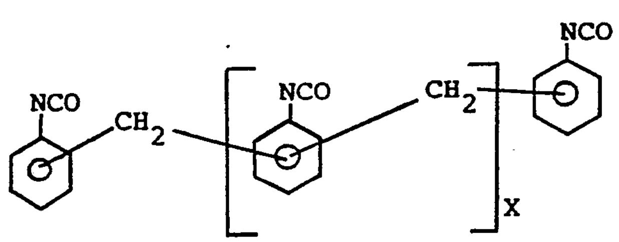

où X vaut 1 à 3.

14. Une composition thermodurcissable à base de solvant selon la revendication 12, dans laquelle l'agent de réticulation polyisocyanate bloqué employé comprend le produit de réaction d'un agent de blocage à hydrogène actif avec du polyisocyanate comprenant un polyisocyanate à cycle isocyanurate préparé par cyclotrimérisation de diisocyanate.

15. Une composition thermodurcissable à base de solvant selon la revendication 12, dans laquelle le polyisocyanate employé dans la préparation de l'agent de réticulation polyisocyanate bloqué comprend un prépolymère terminé par des groupes isocyanates préparé en faisant réagir un polyol avec un excès de polyisocyanate.

16. Une composition thermodurcissable selon l'une quelconque des revendications 1 à 11, dans laquelle l'agent de réticulation consiste en hexa(méthoxyméthyl)mélamine.